Europäisches Patentamt

European Patent Office

Office européen des brevets

(11) Numéro de publication : **0 335 759 B1**

(12) **FASCICULE DE BREVET EUROPEEN**

(45) Date de publication du fascicule du brevet :
**17.06.92 Bulletin 92/25**

(51) Int. Cl.⁵ : **G01P 13/02,** G01P 5/22,
G01P 5/00

(21) Numéro de dépôt : **89400564.4**

(22) Date de dépôt : **01.03.89**

(54) **Anémomètre ultrasonore.**

(30) Priorité : **03.03.88 FR 8802722**

(43) Date de publication de la demande :
**04.10.89 Bulletin 89/40**

(45) Mention de la délivrance du brevet :
**17.06.92 Bulletin 92/25**

(84) Etats contractants désignés :
**AT CH DE ES GB IT LI NL SE**

(56) Documents cités :
**FR-A- 2 408 145**
**US-A- 3 435 677**
**US-A- 3 633 415**
**ULTRASONIC IMAGING, vol. 8, no. 4, octobre
1986, pages 272-284, Academic Press, Inc.,
Duluth, MN, US; D.J. CATHI-
GNOL:"Signal-to-clutter ratio in pseudo random doppler flowmeter"**

(73) Titulaire : **SOCIETE SIMECSOL**
**8, avenue Newton**
**F-92350 Le Plessis Robinson (FR)**

(72) Inventeur : **Pincent, Bernard J.**
**24, allée Blaise Pascal**
**F-78460 Chevreuse (FR)**
Inventeur : **Journe, Paul Y.**
**8, rue de Strasbourg**
**F-38000 Grenoble (FR)**
Inventeur : **Brugnot, Gérard M.**
**11, blvd. Maréchal Leclerc**
**F-38000 Grenoble (FR)**

(74) Mandataire : **Joly, Jean-Jacques et al**
**CABINET BEAU DE LOMENIE 55, rue
d'Amsterdam**
**F-75008 Paris (FR)**

## EP 0 335 759 B1

**Description**

La présente invention a pour objet un anémomètre du type comportant un ensemble de sondes émettrices et réceptrices d'ultrasons disposées de manière à définir au moins trois trajets différents de propagation d'ultrasons dans l'air, et un dispositif de mesure des temps de propagation des ultrasons le long des différents trajets et de calcul de la direction et de la vitesse du vent à partir des temps de propagation mesurés.

Il existe des anémomètres de nombreux types, mais aucun ne permet la mesure de la vitesse du vent avec toute la précision souhaitable dans des conditions difficiles, notamment en cas de givre ou de neige, et en autonomie suffisante.

Ainsi, le givre perturbe de façon significative le fonctionnement des anémomètres à rotation en modifiant le coefficient de frottement des entraînements mécaniques. Le givre peut certes être éliminé par chauffage, mais la consommation énergétique est telle que l'autonomie est très limitée. Les anémomètres à rotation présentent aussi l'inconvénient de fournir des résultats avec une erreur qui peut être importante dans des conditions extrêmes (vent de vitesse très élevée).

Les anémomètres sans partie mobile ne présentent pas tous les inconvénients des anémomètres à rotation, mais leur fonctionnement est affecté par le dépôt de givre ou de neige sur leurs organes sensibles tels que tube de Pitot ou fil chaud. Cette sensibilité au givre et à la neige se retrouve également pour les anémomètres ultrasonores connus.

Ces derniers présentent d'autres inconvénients. Dans certains cas (par exemple US-A-3 633 415), le temps de propagation entre une sonde émettrice et une sonde réceptrice est déterminé en mesurant l'intervalle de temps entre l'émission d'un signal et la réception de ce signal détectée par franchissement d'un seuil par le signal de sortie de la sonde réceptrice. Ce mode de mesure s'avère sensible aux signaux parasites et nécessite l'émission d'un signal ayant une énergie relativement grande, ce qui nuit à l'autonomie de l'appareil.

Dans d'autres cas, la mesure effectuée porte sur le déphasage entre signal émis et signal reçu (par exemple FR-A-2 408 145). Compte-tenu de la fréquence du signal ultrasonore et de la distance entre sondes émettrice et réceptrice, le déphasage porte sur plusieurs périodes du signal ultrasonore. Des erreurs de mesure peuvent alors se produire par suite de perte de la référence de déphasage nul.

Aussi, la présente invention a-t-elle pour but de fournir un anémomètre ultrasonore dont le fonctionnement ne soit pas affecté par le givre ou la neige, qui ne demande pas une consommation élevée d'énergie et peut donc posséder une grande autonomie et qui permette une mesure fiable du temps de propagation des ultrasons entre sonde émettrice et sonde réceptrice.

Ce but est atteint grâce à un anémomètre ultrasonore du type défini en tête de la présente description et dans lequel, conformément à l'invention :

– les sondes émettrices et réceptrices sont des sondes basse fréquence, chaque sonde émettrice étant destinée à émettre un signal ultrasonore sous forme d'un train d'onde déterminé à une fréquence ultrasonore comprise entre 10 et 200 kHz, et

– le dispositif de mesure et de calcul comprend des moyens de mesure de temps de propagation par corrélation entre signal émis par une sonde émettrice et signal reçu par au moins une sonde réceptrice.

L'utilisation de basses fréquences, contrairement à ce qui est généralement pratiqué dans les anémomètres ultrasonores connus, permet d'éviter les problèmes de réflexion et de diffraction des ondes ultrasonores sur leur trajet à cause d'éventuels obstacles qu'elles pourraient rencontrer (neige, sable, embruns, ...). De plus, la sensibilité à la neige ou au givre est amoindrie du fait de la meilleure capacité des ondes à traverser des matériaux parasites. Il est alors envisageable de protéger chaque sonde au moyen d'une étoffe vibrante s'opposant au dépôt de givre, sans perturber de façon notable le passage des vibrations ultrasonores.

La mesure des temps de propagation par corrélation permet de s'affranchir des inconvénients évoqués plus haut liés à la détection de réception par franchissement de seuil ou à la mesure de déphasage. Afin de réaliser une corrélation la plus significative possible, les sondes émettrices et réceptrices utilisées sont avantageusement à bande passante large ou élargie.

La corrélation peut être effectuée simplement sur deux niveaux, c'est-à-dire après numérisation des signaux émis et reçus sur un bit seulement.

L'ensemble des sondes émettrices et réceptrices peut être agencé de manière à constituer un système redondant, c'est-à-dire un système permettant d'effectuer un nombre de mesures de temps de propagation supérieur au nombre minimum nécessaire pour déterminer le vecteur vitesse du vent (direction et module). Ce nombre minimum est égal à quatre, lorsque la célérité du son dans l'air ambiant n'est pas connue, ou à trois lorsque cette célérité est connue, par exemple déterminée à partir d'une mesure de température ambiante. La redondance permet de continuer à effectuer des mesures en cas de déficience d'une sonde, de fixer un intervalle de confiance pour chaque mesure et de déterminer une éventuelle erreur systématique.

Avantageusement, les sondes émettrices et réceptrices utilisées sont multidirectionnelles, pour former un

2

EP 0 335 759 B1

ensemble dans lequel chaque sonde émettrice émet un signal ultrasonore pouvant être reçu par plusieurs sondes réceptrices.

De la sorte, un système redondant peut être réalisé avec un nombre minimum de sondes.

D'autres particularités et avantages de l'anémomètre conforme à l'invention ressortiront à la lecture de la description faite ci-après, à titre indicatif mais non limitatif, en référence aux dessins annexés qui illustrent :

– figure 1 : une vue d'ensemble très schématique d'un mode de réalisation d'un anémomètre ultrasonore conforme à l'invention,

– figures 2A et 2B : des vues de détail montrant des montages d'élargissement de la bande passante des sondes de l'appareil de la figure 1,

– figures 3A, 3B et 3C sont des courbes illustrant l'élargissement de bande passante obtenu au moyen du montage de la figure 2,

– figure 4 : des diagrammes montrant un signal émis par une sonde et le même signal reçu par une autre sonde, pour montrer le principe de mesure de temps de propagation par corrélation,

– figure 5 : un organigramme montrant les opérations successives effectuées au cours d'un cycle de mesure, et

– figure 6 : une vue de détail montrant une sonde ultrasonore équipée d'un dispositif de protection par étoffe vibrante.

Un anémomètre ultrasonore comprend un ensemble de sondes ultrasonores émettrices et réceptrices qui définissent au moins trois trajets différents non coplanaires pour les ultrasons, chacun entre une sonde émettrice et une sonde réceptrice. La mesure des temps de propagation des ultrasons le long des trois trajets permet, connaissant la célérité du son dans l'air ambiant, de calculer la direction et la vitesse du vent, par exemple sous forme de composantes du vecteur vitesse suivant trois axes mutuellement orthogonaux. Lorsque la célérité du son n'est pas connue, une mesure du temps de propagation le long d'un quatrième trajet différent des trois autres est nécessaire pour résoudre le problème posé.

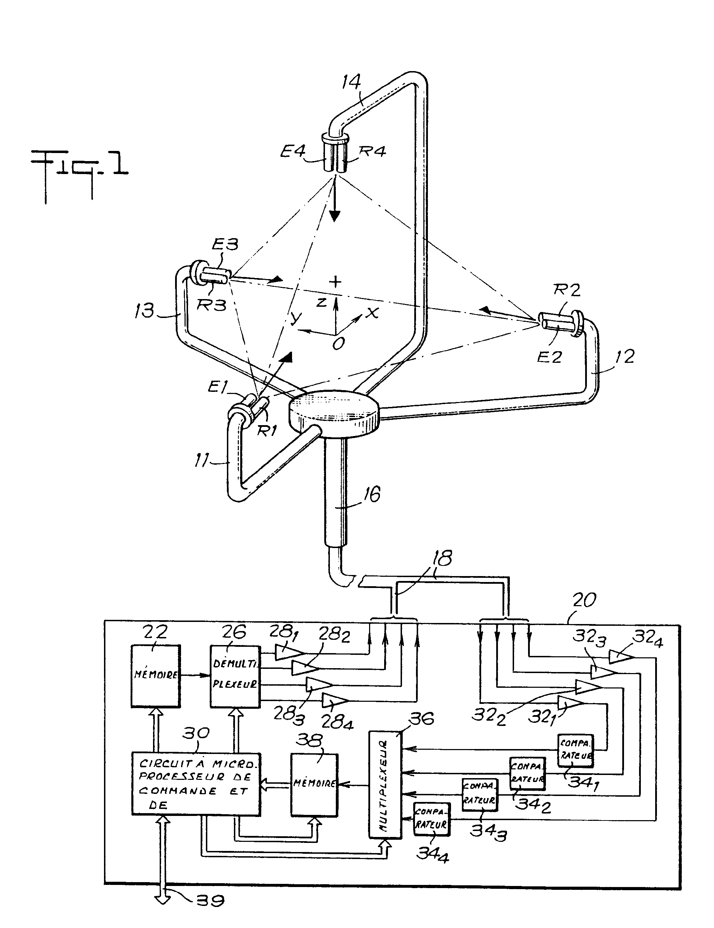

Un mode particulier de réalisation d'un anémomètre conforme à la présente invention sera maintenant décrit en référence à la figure 1.

L'anémomètre ultrasonore illustré par la figure 1 comprend quatre sondes ultrasonores émettrices E1, E2, E3, E4 et quatre sondes ultrasonores réceptrices R1, R2, R3, R4. Les sondes sont disposées par paires comprenant chacune une sonde émettrice et une sonde réceptrice placées côte à côte. Dans l'exemple illustré, les quatre paires de sondes se trouvent aux sommets d'un tétraèdre régulier (dont les côtés sont représentés par des traits mixtes sur la figure 1).

Les sondes sont de type multidirectionnel et sont orientées de manière que le cône d'émission ou de réception de chaque sonde appartenant à une paire englobe les sondes des trois autres paires. Dans l'exemple illustré, toutes les sondes ont l'axe de leur cône d'émission ou de réception dirigé vers le centre de gravité du tétraèdre aux sommets duquel elles sont placées. Ainsi, un signal ultrasonore émis par une sonde émettrice est reçu par trois sondes réceptrices différentes. L'ensemble des sondes définit par conséquent 12 trajets différents pour les ultrasons, ce qui, compte-tenu de ce qui est indiqué plus haut, constitue un système redondant.

Bien entendu, toute autre disposition des sondes émettrices et réceptrices pourra être adoptée dès lors qu'elle permet de définir au moins trois trajets différents non coplanaires, si la célérité du son dans l'air ambiant est connue, ou quatre trajets différents non coplanaires, si la célérité du son dans l'air ambiant n'est pas connue.

Par ailleurs, au lieu d'utiliser des sondes émettrices différentes des sondes réceptrices, on pourra utiliser des sondes fonctionnant tant en réception qu'en émission en prévoyant des moyens adéquats de commutation du mode de fonctionnement.

Dans l'exemple illustré par la figure 1, les sondes sont supportées par une structure formée par des bras de support 11, 12, 13, 14 disposés de manière à ne pas interférer avec les trajets des ultrasons entre les sondes. Les bras relient les sondes à un pied 16.

Les bras 11 à 14 et le pied 16 sont tubulaires et servent de guides pour le passage des conducteurs électriques 18 reliant chaque sonde à un circuit 20 d'excitation des sondes émettrices et de traitement des signaux électriques produits par les sondes réceptrices.

Conformément à l'une des caractéristiques de l'invention, chaque temps de propagation des ultrasons entre une sonde émettrice et une sonde réceptrice est mesuré par corrélation entre le signal émis par la sonde émettrice et le signal reçu par la sonde réceptrice.

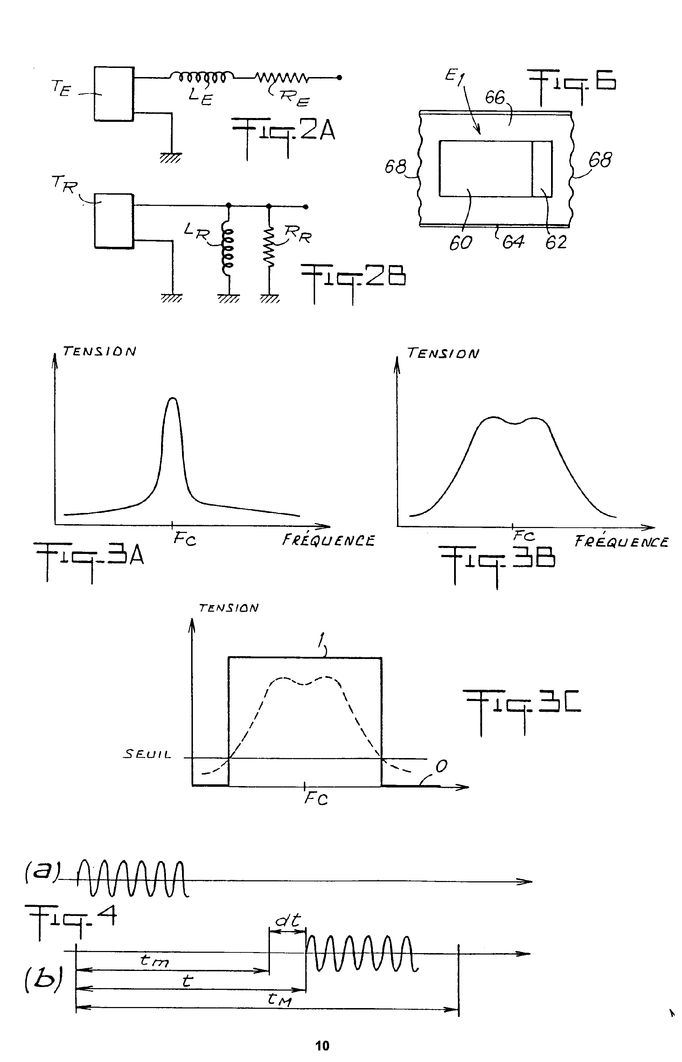

Afin de rendre la corrélation la plus significative possible, les sondes ultrasonores utilisées sont de préférence à bande passante large ou élargie. L'élargissement de la bande passante d'une sonde, par exemple la sonde E1 est réalisée par adaptation d'impédance au moyen d'un circuit de type R, L, C, dont les composants sont montés dans le même boîtier que celui portant le transducteur piézoélectrique de la sonde. Les figures 2A et 2B montrent un tel circuit d'adaptation d'impédance respectivement pour un transducteur $T_E$ d'une sonde émettrice et pour un transducteur $T_R$ d'une sonde réceptrice. A l'émission, le circuit d'adaptation d'impédance

3

comprend une inductance $L_E$ en série avec une résistance $R_E$ sur une première des bornes du transducteur $T_E$ (borne d'entrée), l'autre borne du transducteur étant à la masse. A la réception, le circuit d'adaptation d'impédance comprend une inductance $L_R$ et une résistance $R_R$ en parallèle entre une première des bornes du transducteur $T_R$ (borne de sortie) et la masse, l'autre borne du transducteur étant à la masse. La composante capacitive des circuits d'adaptation d'impédance est apportée par les capacités parasites des transducteurs.

Dans le cas envisagé plus haut d'un transducteur pouvant fonctionner tant en émission qu'en réception, un circuit commutateur commandé par le circuit 20 est connecté à la première borne du transducteur pour relier celle-ci soit à une borne d'entrée par l'intermédiaire d'un circuit d'adaptation d'impédance tel que celui de la figure 2A, soit à une borne de sortie par l'intermédiaire d'un circuit d'adaptation d'impédance tel que celui de la figure 2B.

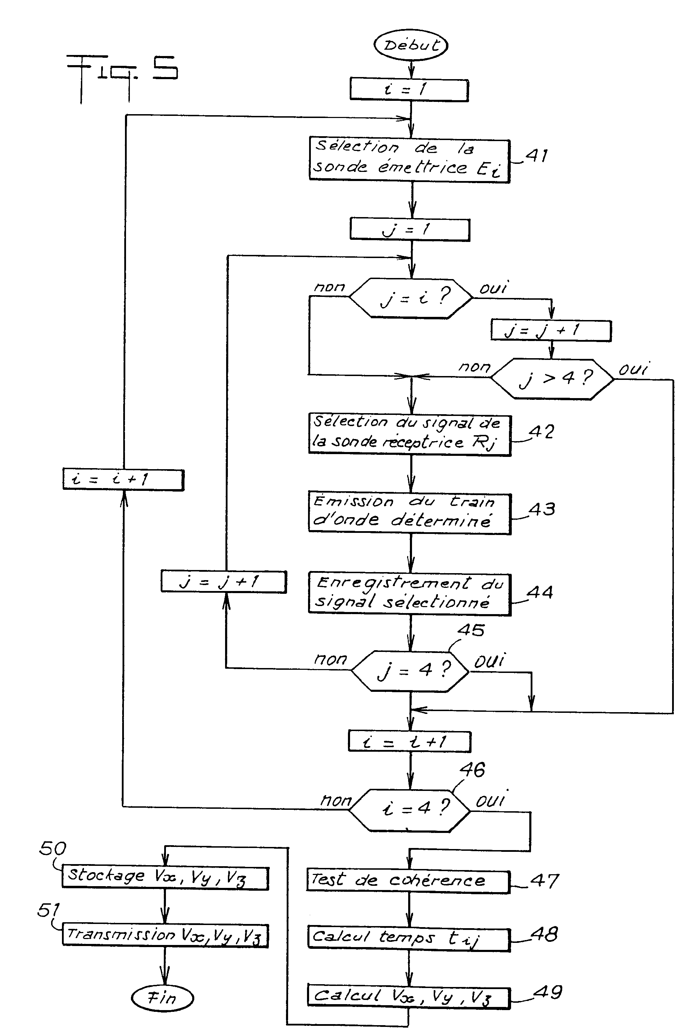

Les figures 3A et 3B montrent les caractéristiques de transfert tension-fréquence d'une sonde avant et après adaptation d'impédance. Sur la figure 3A, on constate que la sonde présente, avant adaptation d'impédance, une bande passante relativement étroite centrée sur la fréquence caractéristique Fc de la sonde. L'effet d'élargissement de la bande passante par adaptation d'impédance est illustré par la figure 3B.

Cet effet d'élargissement peut être renforcé en réception par codage du signal reçu sur deux niveaux, ou codage par tout ou rien (1 ou 0), en choisissant, pour une puissance d'émission donnée, un seuil de tension correspondant à une fréquence aussi extrême que possible, à chaque extrémité de la bande passante. La figure 3C montre, en pointillés, la bande passante après adaptation mais avant comparaison avec le seuil de tension fixé (même courbe que sur la figure 3B) et, en trait plein, la bande passante après comparaison avec le seuil fixé.

Selon une autre caractéristique de l'invention, les sondes ultrasonores utilisées sont des sondes basse fréquence, c'est-à-dire avec une fréquence caractéristique comprise entre 10 et 200 kHz, de préférence entre 15 et 40 kHz.

La corrélation est effectuée entre signal émis et signal reçu tous deux codés sur un bit (c'est-à-dire deux états).

Dans l'exemple illustré, le signal émis est le même pour toutes les sondes émettrices et se présente sous forme d'un train d'onde prédéterminé (ligne $\underline{a}$ de la figure 4). Le mot numérique représentatif du signal émis codé sur deux niveaux est stocké dans une mémoire 22 faisant partie du circuit 20 (figure 1). Les bits successifs formant le mot stocké dans la mémoire 22 sont lus séquentiellement par commande de l'adressage de la mémoire 22 au moyen de signaux fournis par un circuit 30 de commande et de calcul à microprocesseur. La mémoire 22 peut être une mémoire morte, ou mémoire ROM, dans laquelle le mot numérique représentatif du signal émis est enregistré en permanence, ou une mémoire vive, ou mémoire RAM, chargée par le circuit 30. Le rythme de lecture des bits et le codage interne de la séquence sont choisis pour former un signal analogique modulé en fréquence à une fréquence centrale comprise de préférence entre 20 et 30 kHz et avec une largeur de bande de préférence comprise entre 5 et 10 kHz. Ce signal est appliqué à l'entrée d'un circuit démultiplexeur 26 ayant quatre sorties auxquelles sont reliées les sondes émettrices E1 à E4 par l'intermédiaire d'amplificateurs respectifs $28_1$ à $28_4$. Les signaux de commande du circuit démultiplexeur 26 sont fournis par le circuit 30 de manière à exciter une sonde émettrice sélectionnée.

En réponse à l'émission du train d'onde ultrasonore déterminé par une sonde émettrice, les sondes réceptrices (autres que celle juxtaposée à la sonde émettrice) reçoivent ce train d'onde avec des retards correspondants aux temps de propagation des ondes ultrasonores jusqu'à elles. La ligne $\underline{b}$ de la figure 4 montre le train d'onde reçu par une sonde après un retard $\underline{t}$. La détermination du temps de propagation est effectuée en recherchant la valeur du décalage entre signaux émis et reçu pour laquelle la superposition des deux signaux est maximale.

Les signaux électriques produits par les sondes R1 à R4 sont amplifiés au moyen d'amplificateurs respectifs $32_1$ à $32_4$ puis appliqués à des circuits convertisseurs analogiques-numériques respectifs $34_1$ à $34_4$ respectifs.

Dans le cas envisagé d'un codage sur deux niveaux seulement, chaque circuit convertisseur $34_1$ à $34_4$ est constitué par un comparateur dont le seuil de déclenchement est choisi comme indiqué plus haut en référence à la figure 3C. Les bits disponibles en sortie des circuits comparateurs $34_1$ à $34_4$ sont appliqués aux entrées respectives d'un multiplexeur 36 dont la sortie est reliée à une mémoire vive, ou mémoire RAM 38. L'enregistrement dans la mémoire 38 est effectué au rythme de signaux de commande d'adressage produits par le circuit 30 et appliqués à la mémoire 38, le rythme d'écriture dans la mémoire 38 étant identique au rythme de lecture dans la mémoire 22.

Dans l'exemple considéré, un cycle de base de mesure comprend l'enregistrement dans des zones distinctes de la mémoire 36 de 12 mots numériques correspondants aux signaux produits par les sondes réceptrices pour les 12 trajets des ultrasons. Chaque cycle de mesure comprend quatre sous-cycles réalisés en sélectionnant successivement les quatre sondes émettrices. Chaque sous-cycle comprend une séquence de trois émissions successives du signal codé d'émission. Le multiplexeur 36 est commandé par des signaux produits par le circuit 30 pour permettre, au cours de chaque sous-cyle, les enregistrements successifs des mots numériques correspondant aux signaux produits par les trois sondes réceptrices recevant les signaux émis par la sonde émettrice sélectionnée.

L'enregistrement dans la mémoire 38 du signal produit par une sonde réceptrice, et codé, est réalisé pendant une période commençant un temps $t_m$ et se terminant un temps $t_M$ après le début de l'émission du train d'onde par la sonde émettrice. Les temps $t_m$ et $t_M$ sont choisis de manière qu'en toute circonstance les temps de propagation mesurés se situent dans l'intervalle entre $t_m$ et $t_M$.

Le traitement de corrélation effectué sur les signaux émis et reçu numérisés revient donc à rechercher le décalage dt entre signal émis et signal reçu enregistrés pour lequel la superposition des deux signaux est maximale. Le temps de propagation recherché $\underline{t}$ est alors égal à $t_m$ + dt (figure 4).

En pratique, en supposant que le signal émis numérisé se présente sous forme d'un mot de n bits et le signal reçu numérisé se présente sous forme d'un mot de N bits (N supérieur à n), le traitement de corrélation consiste à :

– effectuer un "ET" logique entre chaque bit du mot émis et le bit correspondant parmi les n premiers du mot reçu, par exemple :

```
mot émis : 1 1 0 0 0 1 1 1
mot reçu : 0 0 0 0 0 1 1 0 0 0 1 1 1 0 0 0
résultat : 0 0 0 0 0 1 1 0
```

– compter le nombre de "1" dans le résultat
– décaler le mot reçu d'un bit vers la gauche, et
– recommencer les mêmes opérations jusqu'au (N-n)$^{ème}$ décalage.

Le décalage temporel dt recherché est alors celui correspondant au décalage du mot reçu pour lequel le nombre de "1" dans le résultat est le plus élevé.

Le traitement de corrélation est effectué par programme au moyen du circuit à microprocesseur 30.

Les douze mots numériques enregistrés dans la mémoire 38 au cours d'un cycle de mesure de base permettent la détermination de douze temps de propagation correspondant aux trajets dans un sens et dans l'autre le long des six côtés du tétraèdre aux sommets duquel sont disposées les sondes.

Cet ensemble de mesures redondant peut être exploité de plusieurs façons.

D'abord, un test de cohérence peut être réalisé sur les signaux reçus numérisés pour ne retenir que ceux dans lesquels le nombre de "1" est compris dans une plage de valeurs prédéterminée fonction du motif numérique correspondant au signal émis.

Parmi les signaux reçus ayant satisfait au test de cohérence, un nombre limité d'entre eux peut être retenu pour ne conserver que le nombre minimum strictement nécessaire de valeurs de temps de propagation le long de trajets différents non coplanaires permettant de calculer la vitesse et la direction du vent. Ce nombre minimum est égal à trois, dans la mesure où la célérité du son est connue à partir par exemple d'une mesure de température effectuée au moyen d'un capteur équipant l'appareil. Ce nombre minimum est égal à quatre si la célérité du son est une inconnue supplémentaire.

A titre d'exemple, on recherche les composantes $v_x$, $v_y$, $v_z$ du vecteur vitesse du vent dans un système de coordonnées de référence celui formé par les axes Ox, Oy, Oz mutuellement orthogonaux définis comme suit (figure 1) :

– centre O situé au centre du triangle formé par les paires de sondes E1-R1, E2-R2, E3-R3 et E4-R4,
– axe Ox passant par le sommet occupé par les sondes E1-R1,
– axe Oy parallèle au côté joignant les sommets occupés par les sondes E2-R2 et E3-R3, et
– axe Oz passant par le sommet occupé par les sondes E4-R4.

Si l'on désigne par $t_{ij}$ le temps de propagation le long de la voie joignant la sonde émettrice Ei à la sonde réceptrice Rj (i et j variant de 1 à 4 avec i différent de j), et par $\bar{v}_{ij}$ la composante (module et signe) du vecteur vitesse du vent le long d'un axe parallèle à cette voie et orienté de la sonde émettrice vers la sonde réceptrice, on a :

$$t_{ij} = \frac{d}{v_{ij} + c}, \text{ soit } \bar{v}_{ij} = \frac{d}{t_{ij}} - c$$

$\underline{d}$ étant la longueur des voies de propagation, c'est-à-dire la longueur des côtés du tétraèdre et $\underline{c}$ la célérité du son.

Le système d'équations ci-dessus donnant les différentes valeurs de $\bar{v}_{ij}$ permet de calculer les composan-

tes $v_x$, $v_y$ et $v_z$ recherchées en prenant trois équations (si $\underline{c}$ est connue) ou quatre équations (si $\underline{c}$ est inconnue) parmi celles correspondant aux temps évalués à partir des signaux reçus ayant satisfait au test de cohérence.

La redondance peut aussi être mise à profit en effectuant un calcul mettant en oeuvre une méthode mathématique appropriée aux problèmes redondants et permettant d'évaluer les composantes du vecteur vitesse du vent en fixant, pour celles-ci, un intervalle de confiance.

De telles méthodes mathématiques sont connues en elles-mêmes. A titre d'exemple, on pourra se référer à la méthode de résolution de systèmes inverse décrite par Tarantola et Valette dans Reviews of Geophysics and Space Physics, Vol. 20, No 2, p. 219-232, mai 1982.

On notera encore comme intérêt supplémentaire de la redondance la possibilité de déterminer une éventuelle erreur systématique. Celle-ci peut en effet être considérée comme une inconnue supplémentaire, ce qui conduit à un nouveau système redondant dont la redondance est diminuée de 1 par rapport au système précédent.

La figure 5 est un organigramme récapitulant les différentes phases principales du processus mis en oeuvre sous la commande du circuit à microprocesseur 30. Ces différentes phases sont :

– sélection d'une sonde émettrice $E_i$ (étape 41), par commande du démultiplexeur 26, en partant de i = 1 jusqu'à i = 4 ;

– sélection du signal produit par une sonde réceptrice $R_j$ (étape 42), par commande du multiplexeur 36, en faisant varier j de 1 à 4 avec j différent de i ;

– émission du train d'onde prédéterminé (étape 43), par commande de la lecture du mot numérique enregistré dans la mémoire 22 ;

– enregistrement dans une première zone de la mémoire 38 du signal sélectionné et numérisé entre les instants $t_m$ et $t_M$ suivant l'émission (étape 44) ;

– sélection du signal produit par une deuxième sonde réceptrice (j = j+1 et retour à l'étape 42), nouvelle émission du train d'onde prédéterminé et enregistrement du nouveau signal sélectionné dans une deuxième zone de la mémoire 38 ;

– sélection du signal produit par une troisième sonde réceptrice (retour à l'étape 42), nouvelle émission du train d'onde prédéterminé et enregistrement du nouveau signal sélectionné dans une troisième zone de la mémoire 38 ;

– test j = 4 (étape 45) et retour à l'étape 41 pour sélection de la deuxième sonde émettrice (i = i+1) et répétition des opérations ci-avant suivies, de la même manière, de la sélection de la troisième et de la quatrième sonde émettrice ;

– lorsque toutes les sondes émettrices ont été sélectionnées (test i = 4 à l'étape 46), exécution du test de cohérence sur les signaux numérisés enregistrés (étape 47) en vérifiant que le nombre de "1" dans les mots numériques représentatifs de ces signaux est compris entre deux valeurs prédéterminées ;

– calcul des temps de propagation $t_{ij}$ par mise en oeuvre d'un programme de corrélation stocké en mémoire morte du circuit à microprocesseur 30 (étape 48) ;

– calcul des composantes $v_x$, $v_y$, $v_z$ par mise en oeuvre d'un programme de calcul stocké en mémoire morte du circuit à microprocesseur 30 (étape 49) ;

– stockage des valeurs numériques calculées des composantes $v_x$, $v_y$, $v_z$ en mémoire vive du circuit à microprocesseur 30 (étape 50), et

– transmission des valeurs calculées de $v_x$, $v_y$, $v_z$ à un centre de gestion (étape 51).

Le cas échéant, l'étape 47 de calcul des composantes $v_x$, $v_y$, $v_z$ comprend une phase préalable d'acquisition d'une valeur de température transmise par un capteur de température monté sur l'appareil, suivie d'une phase de lecture dans une mémoire morte de la valeur de célérité du son correspondant à la température mesurée. Le calcul proprement dit des composantes $v_x$, $v_y$, $v_z$ est effectué soit en sélectionnant le nombre minimum de temps de propagation nécessaire à la résolution du système, soit en mettant en oeuvre une méthode adaptée au traitement des problèmes redondants, telle que la méthode précitée de Tarantola et Valette.

La transmission des valeurs numériques calculées des composantes $v_x$, $v_y$, $v_z$ peut être effectuée par une ligne 39 (figure 1) reliant le circuit 20 à un centre de gestion ou à un émetteur d'où ces valeurs peuvent être transmises à un centre de gestion éloigné.

L'alimentation électrique des composants du circuit 20 est réalisée au moyen d'une source autonome telle qu'une batterie (non représentée).

Comme déjà indiqué, l'anémomètre ultrasonore conforme à l'invention est notamment avantageux en ce qu'il est exploitable dans un environnement difficile. Sa quasi-insensibilité au givre et à la neige alliée à sa grande autonomie permettent en particulier son exploitation en montagne.

L'insensibilité au givre peut être renforcée en protégeant chaque sonde au moyen d'une étoffe vibrante, comme illustré par la figure 6.

Sur la figure 6, la sonde, par exemple E1, avec son boîtier cylindrique 60 portant à une extrémité le transducteur ultrasonore 62 (cristal piézoélectrique) et contenant les composants d'adaptation d'impédance est logée coaxialement à l'intérieur d'un support tubulaire 64 auquel elle est reliée par des bras radiaux (non représentés). L'intervalle annulaire 66 entre le boîtier 60 et le support 64 permet la circulation de l'air.

Les extrémités du support 64, qui dépassent celles de la sonde, sont obturées par des étoffes 68. Ces étoffes sont imperméables au givre tout en laissant passer les ondes ultrasonores (en particulier celles à basse fréquence). Comme le montre la figure 6, les étoffes 68 forment des ondulations de manière à pouvoir vibrer. Les vibrations, qui ne demandent pas d'autre source d'énergie que le vent pour être entretenues, contrecarrent le dépôt du givre sur les étoffes elles-mêmes. Le matériau constitutif des étoffes pourra être identique à celui connu et utilisé pour les étoffes de protection des radars, matériau offrant une très faible adhérence au givre.

Telles qu'illustrées par la figure 6, les étoffes 68 sont fixées sur le pourtour des extrémités du support tubulaire 64 et prennent donc chacune sensiblement la forme d'un disque. Si nécessaire, d'autres formes pourront être conférées aux étoffes en montant celles-ci sur des armatures appropriées.

Dans le mode de réalisation décrit ci-avant, l'acquisition des mesures au cours d'un cycle de mesure de base est effectuée en sélectionnant successivement les quatre sondes émettrices et, pour chaque sonde émettrice sélectionnée, en sélectionnant successivement les signaux produits par les trois sondes réceptrices qui reçoivent les signaux émis par la sonde émettrice.

En variante, le multiplexage des émissions et réceptions dans le temps pourra être abandonné au profit d'une réalisation simultanée des émissions et réceptions en codant différemment les signaux émis par les différentes sondes émettrices, de manière à permettre la séparation en réception des signaux provenant des différentes sondes. Cette séparation est effectuée en corrélant le signal reçu séparément avec chaque signal émis. Il est alors impératif de choisir les signaux émis de manière que leur intercorrélation ne présente aucun pic (intercorrélation blanche).

## Revendications

1. Anémomètre ultrasonore comportant un ensemble de sondes émettrices (E1-E4) et réceptrices (R1-R4) d'ultrasons disposées de manière à définir au moins trois trajets différents de propagation d'ultrasons dans l'air, et un dispositif (20) de mesure des temps de propagation des ultrasons le long des différents trajets et de calcul de la direction et de la vitesse du vent à partir des temps de propagation mesurés, caractérisé en ce que :
   – les sondes émettrices et réceptrices sont des sondes basse fréquence, chaque sonde émettrice étant destinée à émettre un signal ultrasonore sous forme d'un train d'onde déterminé à une fréquence ultrasonore comprise entre 10 et 200 kHz, et
   – le dispositif de mesure et de calcul comprend des moyens de mesure de temps de propagation par corrélation entre signal émis par une sonde émettrice et signal reçu par au moins une une sonde réceptrice.

2. Anémomètre selon la revendication 1, caractérisé en ce que chaque sonde est reliée à un circuit d'adaptation d'impédance destiné à élargir la bande passante de la sonde.

3. Anémomètre selon l'une quelconque des revendications 1 et 2, caractérisé en ce que les sondes émettrices (E1-E4) et réceptrices (R1-R4) définissent un nombre de voies différentes de propagation des ultrasons qui est supérieur au nombre minimum nécessaire pour obtenir un ensemble de valeurs de temps de propagation permettant le calcul de la direction et de la vitesse du vent.

4. Anémomètre selon l'une quelconque des revendications 1 à 3, caractérisé en ce que les sondes émettrices (E1-E4) et réceptrices (R1-R4) sont multidirectionnelles et forment un ensemble dans lequel chaque sonde émettrice émet un signal ultrasonore pouvant être reçu par plusieurs sondes réceptrices.

5. Anémomètre selon la revendication 4, caractérisé en ce que les sondes émettrices et réceptrices sont disposées aux sommets d'un tétraèdre et orientées vers le centre de celui-ci.

6. Anémomètre selon l'une quelconque des revendications 1 à 5, caractérisé en ce qu'il comprend des moyens pour effectuer une corrélation entre des signaux émis et reçus sous forme numérique par codage sur un bit seulement.

## Patentansprüche

1. Ultraschallwindmesser mit einer Anordnung von emittierenden (E1-E4) und aufnehmenden (R1-R4) Ultraschallsonden, die derart angeordnet sind, daß sie wenigstens drei unterschiedliche Ultraschallübertragungsbahnen in der Luft definieren, und einer Meßvorrichtung (20) der Übertragungszeiten von Ultraschallen entlang der verschiedenen Bahnen und der Berechnung der Richtung und der Windgeschwindigkeit, ausgehend von den gemessenen Übertragungszeiten, **dadurch gekennzeichnet**, daß:

– die emittierenden und aufnehmenden Sonden Niederfrequenzsonden sind, wobei jede emittierende Sonde dazu dient, ein Ultraschallsignal in Form eines vorbestimmten Wellenzugs bei einer Ultraschallfrequenz zwischen 10 und 200 kHz zu emittieren, und

– die Meß- und Rechenvorrichtung Übertragungszeitmeßvorrichtungen durch Korrelation zwischen emittiertem Signal durch eine Emittersonde und empfangenem Signal durch wenigstens eine Aufnahmesonde aufweist.

2. Ultraschallwindmesser nach Anspruch 1, **dadurch gekennzeichnet**, daß jede Sonde mit einem Impedanzanpassungsschaltkreis verbunden ist, der dazu dient, das hindurchgehende Band der Sonde zu verbreitern.

3. Ultraschallwindmesser nach einem der Ansprüche 1 oder 2, **dadurch gekennzeichnet**, daß die emittierenden (E1-E4) und aufnehmenden (R1-R4) Sonden eine Anzahl von verschiedenen Ultraschallübertragungsbahnen definieren, die größer ist als die notwendige Mindestzahl um eine Gesamtheit oder Anordnung von Werten von Übertragungszeiten zu erhalten, die die Berechnung der Richtung und der Geschwindigkeit des Windes ermöglicht.

4. Ultraschallwindmesser nach einem der Ansprüche 1 bis 3, **dadurch gekennzeichnet**, daß die emittierenden (E1-E4) und aufnehmenden (R1-R4) Sonden Mehrrichtungssonden sind und eine Anordnung bilden, in der jede emittierende Sonde ein Ultraschallsignal emittiert, das von mehreren aufnehmenden Sonden empfangen werden kann.

5. Ultraschallwindmesser nach Anspruch 4, **dadurch gekennzeichnet**, daß die emittierenden und aufnehmenden Sonden an der Spitze eines Tetraeders angeordnet und zum Zentrum von diesem ausgerichtet sind.

6. Ultraschallwindmesser nach einem der Ansprüche 1 bis 5, **dadurch gekennzeichnet**, daß er Einrichtungen zum Erzeugen einer Korrelation zwischen den emittierten und empfangenen Signalen in numerischer Form durch Codierung auf nur ein Bit aufweist.

## Claims

1. Ultrasonic anemometer comprising a plurality of ultrasonic signal emitting (E1-E4) and receiving (R1-R4) probes mounted in such a way as to define at least three different paths for the propagation of ultrasonic signals through the air, and means (20) for measuring the time of propagation of ultrasonic signals along the different paths and for calculating the speed and direction of the wind based upon the propagation times measured, characterized in that

– the emitting and receiving probes are low frequency probes, each emitting probe being capable of producing an ultrasonic signal in the form of a predetermined wave train at an ultrasonic frequency ranging between 10 and 200 kHz, and

– the means for measuring and calculating comprises means for measuring the propagation time by correlation of a signal produced by an emitting probe and the signal received by at least one receiving probe.

2. Anemometer according to claim 1, characterized in that each probe is connected to an impedance adaptation circuit designed to widen the band-pass of the probe.

3. Anemometer according to any one of claims 1 and 2, characterized in that the emitting (E1-E4) and receiving (R1-R4) probes define a number of different ultrasonic signal propagation paths which is greater than the minimum number needed to provide enough propagation time values to afford calculation of the direction and the speed of the wind.

4. Anemometer according to any one of claims 1 to 3, characterized in that the emitting (E1-E4) and the receiving (R1-R4) probes are multidirectional and form a group in which each emitting probe emits an ultrasonic signal which can be received by a plurality of receiving probes.

5. Anemometer according to claim 4, characterized in that the emitting (E1-E4) and the receiving (R1-R4) probes are situated at the apices of a tetrahedron, and orientated toward the center thereof.

6. Anemometer according to any one of claims 1 to 5, characterized in that it comprises means for correlating the emitted signals and the received signals in digital form by coding on a single bit.

Fig.1

Fig.2A

Fig.2B

Fig.6

Fig.3A

Fig.3B

Fig.3C

Fig.4

Fig. 5

```
                          ( Début )
                              │
                              ▼
                      ┌──────────────┐
                      │    i = 1      │
                      └──────────────┘
                              │
                              ▼
            ┌─────────────────────────┐
            │ Sélection  de  la       │── 41
            │ sonde émettrice Eᵢ      │
            └─────────────────────────┘
                              │
                              ▼
                      ┌──────────────┐
                      │    j = 1      │
                      └──────────────┘
                              │
                              ▼
       non  ╱──────────────────╲  oui
      ──────⟨      j = i ?      ⟩──────┐
            ╲──────────────────╱        │
                   │               ┌──────────┐
                   │               │ j = j + 1│
                   │               └──────────┘
                   │                    │
              non ╱──────────╲  oui      │
         ┌────────⟨  j > 4 ?  ⟩──────────┘
         │        ╲──────────╱
         ▼
  ┌─────────────────────────┐
  │ Sélection du signal de  │── 42
  │ la sonde réceptrice Rⱼ  │
  └─────────────────────────┘
              │
              ▼
  ┌─────────────────────────┐
  │ Émission du train       │── 43
  │ d'onde déterminé        │
  └─────────────────────────┘
              │
              ▼
  ┌─────────────────────────┐
  │ Enregistrement du       │── 44
  │ signal sélectionné      │
  └─────────────────────────┘
              │
              ▼      45
       non  ╱──────────╲  oui
      ──────⟨  j = 4 ?  ⟩──────┐
            ╲──────────╱        │
                               ▼
                      ┌──────────────┐
                      │   i = i + 1   │
                      └──────────────┘
                               │
                               ▼      46
               non  ╱──────────╲  oui
              ──────⟨  i = 4 ?   ⟩──────┐
                    ╲──────────╱
```

┌──────────┐
│ j = j + 1│
└──────────┘

┌──────────┐
│ i = i + 1│
└──────────┘

50 ┌─────────────────────┐
   │ Stockage Vx, Vy, Vz │
   └─────────────────────┘

51 ┌──────────────────────────┐
   │ Transmission Vx, Vy, Vz  │
   └──────────────────────────┘

( Fin )

┌─────────────────────┐
│ Test de cohérence   │── 47
└─────────────────────┘

┌─────────────────────┐
│ Calcul temps tᵢⱼ    │── 48
└─────────────────────┘

┌─────────────────────┐
│ Calcul Vx, Vy, Vz   │── 49
└─────────────────────┘

11